# EUROPÄISCHE PATENTSCHRIFT

(11) **EP 4 077 080 B1**
(45) Veröffentlichungstag und Bekanntmachung des Hinweises auf die Patenterteilung: **14.05.2025**
(21) Anmeldenummer: 20820863.7
(22) Anmeldetag: 07.12.2020
(51) Int. Cl.: B60T 17/06, B60T 13/14

(54) **HYDRAULISCHES BREMSGERÄT FÜR EINE KRAFTFAHRZEUGBREMSANLAGE MIT EINER VERBESSERTEN BEHÄLTERANBINDUNG**
HYDRAULIC BRAKE DEVICE FOR A MOTOR VEHICLE BRAKE SYSTEM HAVING AN IMPROVED CONTAINER CONNECTION
DISPOSITIF DE FREINAGE HYDRAULIQUE POUR UN SYSTÈME DE FREINAGE DE VÉHICULE À MOTEUR AYANT UN MEILLEUR RACCORDEMENT DE RÉCIPIENT

(30) Priorität: 17.12.2019 DE 102019219869
(43) Veröffentlichungstag der Anmeldung: 26.10.2022
(73) Patentinhaber: Continental Automotive Technologies GmbH, 30175 Hannover (DE)
(72) Erfinder: HIRSEMANN, Mike, 60488 Frankfurt am Main (DE); BRIESEWITZ, Rüdiger, 60488 Frankfurt am Main (DE); DOLMAYA, Joseph, 60488 Frankfurt am Main (DE); SCHLICHT, Stephan, 60488 Frankfurt am Main (DE); DINKEL, Dieter, 60488 Frankfurt am Main (DE)
(74) Vertreter: Continental Corporation
(86) Internationale Anmeldenummer: PCT/EP2020/084794
(87) Internationale Veröffentlichungsnummer: WO 2021/122077

(56) Entgegenhaltungen:
- WO-A1-2019/057391
- WO-A1-2019/072441
- WO-A1-2019/105837
- US-A1- 2019 120 421

## Beschreibung

### Bezeichnung der Erfindung

Die Erfindung betrifft ein Bremsgerät für eine hydraulische Kraftfahrzeugbremsanlage nach dem Oberbegriff des Anspruchs 1.

Hydraulische Bremsgeräte für Kraftfahrzeuge sind weit verbreitet. Darin wird mithilfe von auf ein hydraulisches Druckmittel, beispielsweise eine Bremsflüssigkeit wirkenden Kolben Bremsdruck erzeugt. Des Weiteren können derartige Bremsgeräte elektromechanische Antriebe, Kraftverstärkungsaggregate sowie vielfältige Ventilanordnungen enthalten. Ein Bremsgerätgehäuse, welche alle vorgenannten Komponenten beinhaltet, wird meist als ein Hydraulikblock bezeichnet.

Das benötigte hydraulische Druckmittel wird aus einem Druckmittelbehälter über hydraulische Verbindungen dem Bremsgerät zur Verfügung gestellt. Es ist bekannt, denn Druckmittelbehälter oberhalb des Bremsgeräts auf dem Bremsgerätgehäuse anzuordnen. Zur Verbindung des Druckmittelbehälters mit dem Bremsgerät dienen dabei Rohrförmige Anschlussstutzen, welche in vertikale Richtung in korrespondierenden Aufnahmen im Bremsgerätgehäuse gesteckt werden.

Man bemüht sich bei Fahrzeugen den verfügbaren Bauraum möglichst effektiv zu nutzen und dabei den Anteil des Fahrgastraums zulasten des Motorraums zu maximieren. Zudem verfügen moderne Fahrzeuge zunehmend über besonders flache Frontscheiben, welche beispielsweise aus stilistischen oder aerodynamischen Gründen sehr stark geneigt sind. Um eine ausreichende Kopffreiheit für den Fahrer dennoch zu garantieren, reichen solche Frontscheiben sehr weit nach vorne. In dessen Folge kommt es oft zur Bildung eines ausgeprägten Überhangs in einem Bereich unmittelbar oberhalb des Montageortes eines Bremsgeräts.

Weil ein Druckmittelbehälter zum Befüllen komfortabel erreichbar sein muss, führt dies dazu, dass Druckmittelbehälter ausgehend von der Position der Anschlussstutzen sehr weit in Fahrtrichtung vorgestreckt ausgebildet sind, um den Überhang zu überwinden. Des Weiteren führt der knappe Bauraum unter dem Überhang dazu, dass Behältergehäusen gleichsetze flach und breit gebaut werden müssen, um den benötigten Volumen bereitstellen zu können. Zum relevanten Stand der Technik wird hierbei beispielhaft auf WO2019105837A1 und WO2019072441A1 verwiesen. Um die notwendige Stabilität und Steifigkeit zu erreichen, müssen solche Behälter oft mit diversen inneren Verstrebungen und hohen Wandstärken versehen werden, wodurch die Herstellung komplexer und der Preis höher werden.

Das hydraulische Druckmittel ist oft brennbar, daher existieren vielfach Anforderungen, dass im Falle eines Crashs kein hydraulisches Druckmittel unkontrolliert in den Motorraum gelangen darf, wo es gegebenenfalls auf heiße Motorteile gelangen und sich entzünden könnte. Bei einem Crash wirken auf den Druckmittelbehälter sehr hohe Beschleunigungskräfte, welche diesen aus seinem Sitz im Bremsgerätgehäuse herausreißen könnten. Um in einem solchen Fall Druckmittelverlust zu vermeiden ist es bekannt, in den Anschlussstutzen gesonderter Sperrventile vorzusehen, welche außerhalb der Aufnahmesitze die hydraulische Verbindung durch die Anschlussstutzen blockieren. Bei besonders heftigen Crashsituationen, insbesondere einem Frontalaufprall bei einer hohen Geschwindigkeit, können derart hohe Beschleunigungskräfte auf den Druckmittelbehälter einwirken entstehen, dass die Anschlussstutzen von dem Behältergehäuse abreißen oder das Behältergehäuse im Ganzen kollabiert. Ein sehr weit in Fahrtrichtung vorgestreckt das Behältergehäuse verstärkt diese Gefahr, weil die darauf wirkenden Beschleunigungskräfte durch Hebelwirkungen noch verstärkt werden.

Aus US2019120421A1 ist eine andere Lösung mit einem sogenannten Remote-Behälter bekannt, bei welcher der Druckmittelbehälter räumlich von dem Bremsgerät entfernt an einer geeigneten Stelle im Motorraum befestigt und über eine Schlauchleitung mit einem Anschluss an der Oberseite des Bremsgerätgehäuses verbunden ist. Bei einem derartigen Aufbau wird jedoch der Aufwand für Handhabung und Montage im Fahrzeug signifikant erhöht und die Crashsicherheit aufgrund von empfindlichen Schlauchverbindungen und zusätzlichen hydraulischen Schnittstellen reduziert.

Es stellt sich somit eine Aufgabe, ein verbessertes Bremsgerät mit einem Druckmittelbehälter vorzuschlagen, welches die vorgenannten Nachteile vermeidet und zugleich eine erhöhte Crashsicherheit bietet.

Die Aufgabe wird erfindungsgemäß durch ein Bremsgerät mit Merkmalskombination nach Anspruch 1 gelöst. Unteransprüche geben weitere vorteilhafte Ausführungen und Weiterbildungen der Erfindung an.

Die Erfindung sieht vor, dass der Druckmittelbehälter wenigstens einen ersten Anschlussstutzen zur Versorgung des Bremsgeräts mit einem hydraulischen Druckmittel aufweist, welcher im Wesentlichen parallel oder in einem spitzen Winkel zur Fahrtrichtung ausgerichtet in einem in dem Bremsgerätgehäuse ausgebildeten Aufnahmesitz gesteckt angeordnet ist. Dadurch wird die Gefahr des Abreißens von einem Anschlussstutzen insbesondere bei einem Frontaufprall eliminiert oder zumindest signifikant reduziert.

Gemäß einer bevorzugten Weiterbildung kann der Druckmittelbehälter im Wesentlichen an der Frontseite des Bremsgerätgehäuses angeordnet und befestigt sein. Damit wird der enge Bauraum oberhalb des Bremsgeräts gemieden und stattdessen ein besser zugänglicher Bauraum unmittelbar vor dem Bremsgerät optimal ausgenutzt. Die Anforderungen an die Stabilität von dem Behältergehäuse können dadurch gesenkt werden, das Behältergehäuse kann einfacher, dünnwandiger und damit leichter und kostengünstiger hergestellt werden. Die Zugänglichkeit für die Befüllungsanlage wird ebenfalls signifikant verbessert.

Die Erfindung sieht weiter vor, dass der Druckmittelbehälter wenigstens zwei Befestigungslaschen zum Befestigen an Bremsgerätgehäuse aufweist, wobei die Befestigungslaschen im Wesentlichen entlang der Fahrtrichtung gestreckt sowie quer zur Fahrtrichtung zueinander beanstandet ausgebildet sind, wobei jede Befestigungslasche mit einem ersten Ende mit dem Behältergehäuse verbunden oder an dem Behältergehäuse angeformt ist und an einem anderen Ende ein Befestigungsauge aufweist. Dadurch kann der Druckmittelbehälter auch bei Montage an der Frontseite des Bremsgeräts sowie mit in Fahrtrichtung ausgerichteten Anschlussstutzen sicher an Bremsgerätgehäuse gehalten werden. Die während einer Druckbefüllung entstehenden Kräfte werden ebenfalls sicher aufgenommen.

Für eine besonders einfache, sichere, schnelle und schraubenlose Fixierung des Druckmittelbehälters am Bremsgerätgehäuse sieht die bevorzugte Ausführungsform der Erfindung vor, dass der Druckmittelbehälter durch einen Querbolzen an dem Bremsgerätgehäuse gesichert ist, welcher durch einen Durchbruch im Bremsgerätgehäuse sowie durch die Befestigungsaugen in beiden Befestigungslaschen durchgesteckt und am wenigstens einem Befestigungsauge über eine Rastverbindung zumindest in axiale Richtung fixiert ist.

Eine besonders einfache und effiziente Verlustsicherung des Querbolzens kann realisiert werden, wenn die Rastverbindung durch eine Mehrzahl von Federlaschen realisiert ist, welche auf wenigstens einer Befestigungslasche um das Befestigungsauge herum angeordnet sind und eine endseitige Aufdickung des Querbolzens radial umgreifen.

Für die erhöhte Crashsicherheit sieht die Erfindung vor, dass die Befestigungslasche derart als eine Sollbruchstelle ausgebildet ist, dass sie bei einer definierten Bruchlast an wenigstens einer Stelle durchbricht, wobei die für eine konstruktive Auslegung der Befestigungslasche herangezogene Bruchlast höher gewählt ist, als eine bei einer Druckbefüllung des Druckmittelbehälters) auf die Befestigungslasche wirkende Zugkraft und zugleich geringer, als eine kleinstmögliche Kraft, welche einen Integritätsverlust des Behältergehäuses aufgrund von auf das Behältergehäuse von innen und/oder außen wirkenden Beschleunigungskräften erforderlich ist. Dadurch kann erreicht werden, dass das Behältergehäuse unter kontrollierten Bedingungen und bei definierten Lasten sich vom Bremsgerät löst, bevor an dem Behältergehäuse Undichtigkeitsstellen entstehen.

Um die Sollbruchstelle besonders einfach und zuverlässig von dem zu schützenden Behältergehäuse auf die sicherheitstechnisch weniger relevante Befestigungslasche zu verlegen sieht eine Weiterbildung der Erfindung vor, dass die Befestigungslaschen entlang der Fahrtrichtung in Bezug zu einem Massenschwerpunkt des Druckmittelbehälters versetzt angeordnet sind. Dadurch kann die Last auf definierte Abschnitte der Befestigungslaschen durch Hebel- und Momentwirkungen verstärkt werden.

Für eine sichere und gleichmäßige Kraftaufnahme bei einem Büffelvorgang sieht eine Ausführungsform der Erfindung vor, dass der Druckmittelbehälter wenigstens einen zweiten Anschlussstutzen aufweist, welcher zu dem ersten Anschlussstutzen parallel ausgerichtet sowie in eine vertikale Richtung beabstanded ausgebildet ist und die Befestigungslaschen in vertikale Richtung in einem Bereich zwischen dem ersten und dem zweiten Anschlussstutzen angeordnet sind.

Eine andere Weiterbildung der Erfindung sieht vor, dass in dem Behältergehäuse eine hydraulisch dichte Membrane angeordnet ist, welche zumindest abschnittsweise an eine Außenwandung von dem Behältergehäuse anliegt, insbesondere diese im Wesentlichen vollständig ausgekleidet. Dadurch kann sogar bei Beschädigungen von dem Behältergehäuse ein unkontrollierter Austritt von Druckmittel verhindert werden.

Besonders effizient kann die Erfindung bei einem Bremsgerät eingesetzt werden, welche über eine elektromotorische Antriebseinheit betätigbar ist und eine elektronische Steuereinheit umfasst, wobei die Antriebseinheit und die Steuereinheit gegenüberliegend an dem Bremsgerätgehäuse befestigt angeordnet sind.

Um eine Notbremsung oder Bremsung in eine Rückfallebene außerhalb eines regulären Bremsbetriebs besonders einfach sicherzustellen, kann das Bremsgerät durch einen Fahrer über ein Betätigungsglied mechanisch betätigbar sein, welcher an der Rückseite von dem Bremsgerätgehäuse angeordnet ist.

Weitere Merkmale und Vorteile der Erfindung ergeben sich aus der nachfolgenden Beschreibung. Nachstehend zeigten:
Fig.1 eine stark vereinfachte und nicht maßstäbliche Abbildung einer im Fahrzeug montierten Ausführungsform eines erfindungsgemäßen Bremsgeräts in eine Ansicht quer zur Fahrtrichtung.
Fig.2 eine stark vereinfachte und nicht maßstäbliche Abbildung eines Bremsgeräts gemäß Fig.1 in Draufsicht.
Fig.3 eine Detailansicht der Rastverbindung für den Querbolzen
Fig.4 eine räumliche Ansicht einer Ausführungsform des erfindungsgemäßen Bremsgeräts.
Fig.5 eine räumliche Ansicht eines Druckmittelbehälters gemäß Fig.4.

### Fig.1

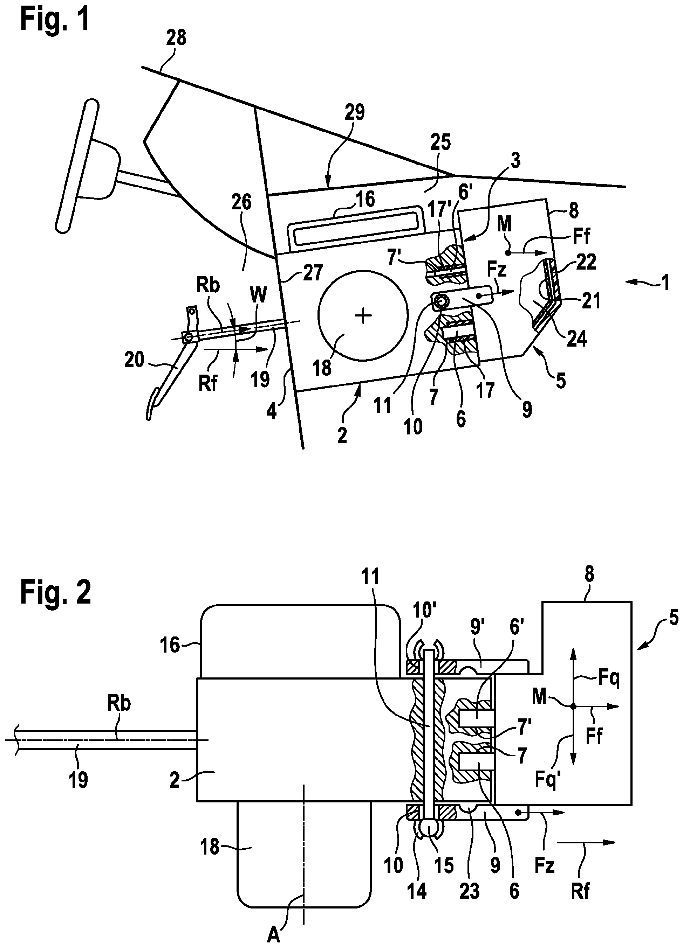

Fig. 1 zeigt stark vereinfacht und nicht maßstabsgetreu eine Ausführungsform eines erfindungsgemäßen Bremsgeräts 1. Eine sogenannte Spritzwand 27 Trend in einem Fahrzeug den Motorraum 25 von dem Fahrgastraum 26. Das Bremsgerät 1 ist im Motorraum 25 mit einer Rückseite 4 von seinem wesentlichen quaderförmig ausgebildeten Bremsgerätgehäuse 2 an einer Spritzwand 27 des Fahrzeugs montiert. Eine Spritzwand 27 ist in einem Fahrzeug in der Regel orthogonal oder leicht geneigt zu Fahrtrichtung Rf ausgerichtet. Eine der Rückseite 4 parallel gegenüberliegende Frontseite 3 von der Bremsgerätgehäuse 2 verbleibt so nach Montage im Fahrzeug ebenso orthogonal oder leicht geneigt zur Fahrtrichtung Rf ausgerichtet.

Das Bremsgerät 1 wird vom Fahrer durch ein mit einem Pedal 20 gekoppeltes Betätigungsglied 19 mechanisch betätigt, welches in die Rückseite 4 des Bremsgerätgehäuses 2 eingreift. Je nach Ausführungsart der Anlenkung des Betätigungsglieds 19 läuft dieser entlang oder taumelt sehr leicht um die Betätigungsrichtung Rb. Die Betätigungsrichtung Rb ist somit im wesentlichen achsparallel oder in einem sehr spitzen Winkel W zur Fahrtrichtung RF ausgerichtet, wobei der Winkel W meistens in einem Bereich weniger als 10° liegt.

Ein derartiges Bremsgerätgehäuse 2 kann in Praxis intern mehrere, hier nicht explizit abgebildeten hydraulischen Kreise sowie Komponenten zur Druckerzeugung und Steuerung beinhalten und wird oft als ein Hydraulikblock bezeichnet.

Neben einer rein mechanischen Betätigung kann das Bremsgerät 1 über eine elektromotorische Antriebseinheit 18 betätigt werden, welche beispielsweise eine hier nicht explizit gezeigte hydraulische Pumpe im Inneren von dem Bremsgerätgehäuse 2 antreibt. Das Bremsgerät 1 kann über eine elektronische Steuereinheit 16 gesteuert werden. Die Antriebseinheit 18 und elektronische Steuereinheit 16 sind an 2 gegenüberliegenden Seiten des Bremsgerätgehäuse 2 angebracht, die Antriebsachse A der Antriebseinheit 18 ist dabei quer zu Betätigungsrichtung Rb ausgerichtet.

Aufgrund des flachen Neigungswinkel Frontscheibe 28 befindet sich oberhalb des Montageortes des Bremsgeräts 1 ein ausgeprägter Überhang 29.

An der Frontseite 3 von dem Bremsgerätgehäuse 2 ist ein Druckmittelbehälter 5 montiert. Der Druckmittelbehälter 5 verfügt über ein Behältergehäuse 8 mit einer oder mehreren darin ausgebildeten, mit dem hydraulischen Druckmittel gefüllten Kammern 24. An dem Behältergehäuse 8 sind zwei zueinander parallel sowie in vertikaler Richtung beabstandet angeordneten Anschlussstutzen 6, 6' ausgebildet. Die Anschlussstutzen 6, 6' dienen zur Speisung von den hier nicht explizit gezeigten hydraulischen Komponenten innerhalb des Bremsgerätgehäuses 2 mit dem Druckmittel aus dem Druckmittelbehälter 5

Die Anschlussstutzen 6, 6' sind, analog zu Betätigungsrichtung Rb, achsparallel oder in einem leichten Spitzwinkel W zu Fahrtrichtung RF ausgerichtet, in korrespondierende Aufnahmesitze 7, 7' in der Frontseite 3 von der Bremsgerätgehäuse 2 gesteckt und darin durch Dichtelemente 17, 17' abgedichtet. Der Druckmittelbehälter 5 verfügt ferner über hier nicht explizit gezeigte Sperrventile, welche die Verbindungskanäle innerhalb der Anschlussstutzen 6, 6' zwangsweise versperren, wenn die Anschlussstutzen 6, 6' sich außerhalb der Aufnahmesitze 7, 7' befinden.

In vertikaler Richtung in einem Bereich zwischen den beiden Anschlussstutzen 6 und 6' sind an dem Behältergehäuse 8 zwei Befestigungslaschen 9, 9' in einem definierten Abstand quer zur Fahrtrichtung RF angebracht, welche zur Sicherung von dem Druckmittelbehälter an dem Bremsgerätgehäuse 2 dienen.

Ein mit Druckmittel befühlte Druckmittelbehälter 5 weist im betriebsbereiten Zustand einen definierten Massenschwerpunkt M auf. Die Befestigungslaschen 9, 9' sind dabei so ausgelegt, dass deren Anbindungspunkte an dem Behältergehäuse 8 in Fahrtrichtung RF in dem Abstand zu diesem Massenschwerpunkt angeordnet sind.

Bei der gezeigten Ausführungsform des Behältergehäuse 8 von ihnen mit einer Membrane 21 ausgekleidet, welche an der Außenwandung 22 von dem Behältergehäuse 8 anliegt. Die Membrane 21 dient dazu, den Austritt von Druckmittel bei Beschädigung der Außenwandung 22 beispielsweise durch Risse zu verhindern.

### Fig.2

Fig.2 zeigt die Ausführungsform des Bremsgerät gemäß Fig.1 in Draufsicht sowie mit mehreren Ausbrüchen, um die Montage und Sicherung von dem Druckmittelbehälter 5 an dem Bremsgerätgehäuse 2 zu verdeutlichen.

Der Druckmittelbehälter 5 ist aus Kunststoff, beispielsweise in einem Spritzgussverfahren ausgebildet und kann sowohl einteilig als auch aus mehreren Teilen verschweißt oder verklebt hergestellt werden. Um den vorhandenen Bauraum optimal auszunutzen, ist das Behältergehäuse 8 annähernd L-förmig ausgebildet. Der Massenschwerpunkt M befindet sich dadurch in Bezug zu Betätigungsachse Rb in Querrichtung versetzt.

Die beiden entlang der Fahrtrichtung RF gestreckt ausgebildeten Befestigungslaschen 9,9' umgreifen das Bremsgerätgehäuse 2 beidseitig. Jede Befestigungslasche 9,9' ist mit ihrem behälterseitigen Ende mit dem Behältergehäuse 8 verbunden, beispielsweise daran angeformt, angeklebt, verschweißt oder verschraubt. An ihrem dem Bremsgerätgehäuse 2 zugewandten Ende weist jede Befestigungslasche 9,9' ein Befestigungsauge 10, 10' auf. Um das Befestigungsauge 10 herum sind mehrere Federlaschen 14 angeformt.

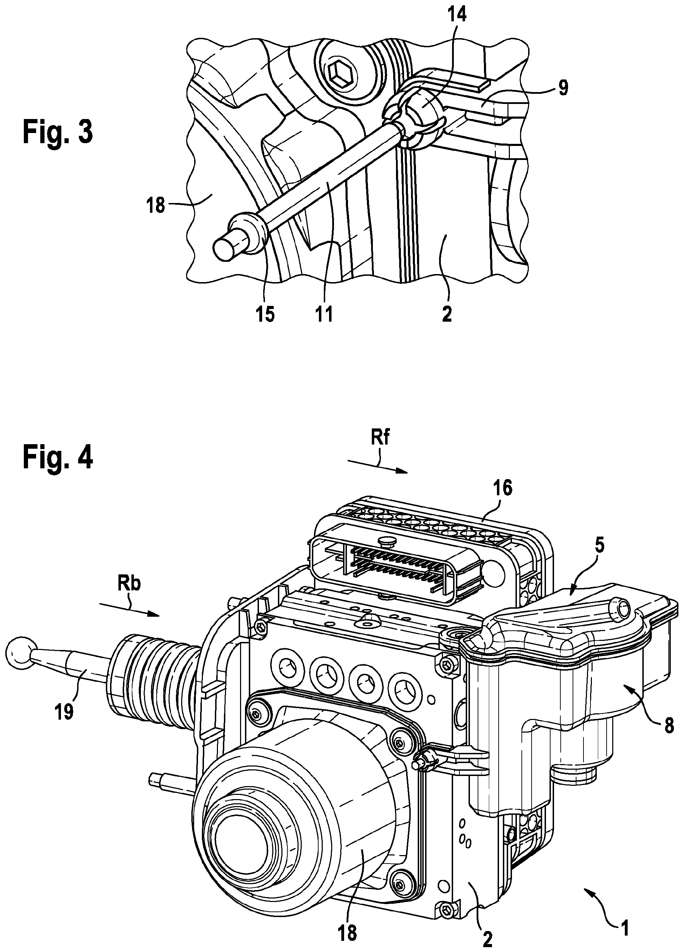

Ein Querbolzen 11 dient zur Sicherung des Druckmittelbehälters 5 an dem Bremsgerätgehäuse 2. Der Querbolzen 11 ist im wesentlichen Stiftvermerk ausgebildet und verfügt an einem Ende über eine Aufdickung 15. Bei Montage des Druckmittelbehälters 5 wird der Querbolzen 11 durch eine Durchgangsbohrung in dem Bremsgerätgehäuse 2 und beide Befestigungsaugen 10 durchgesteckt. Die einseitige Aufdickung 15 wird zwischen die Feder lassen 14 hineingeschoben und darin verrastet. Dadurch wird der Querbolzen axial gegen Herausfallen gesichert und sichert zugleich den Druckmittelbehälter 5 an dem Bremsgerätgehäuse 2. Fig. 3 dient zur Verdeutlichung des vorstehend geschilderten Sachverhalts am Beispiel einer weiteren Ausführungsform.

In einem Crashfall wirken auf den Massenschwerpunkt M des Druckmittelbehälters 5 starke Beschleunigungskräfte Ff, Fq. Solche Beschleunigungskräfte können sowohl durch die Masse des Druckmittelbehälters 5 samt Anbauteile und Druckmittel selbst, als auch durch externe Gegenstände verursacht werden, welche auf den Druckmittelbehälter 5 einwirken. Besonders bei einem Frontaufprall oder Seitenaufprall können die korrespondierenden Beschleunigungskräfte Ff, Fq derart hoch ausfallen, dass des Behältergehäuse 8 kollabiert. Ein Druckmittelverlust wäre in einem solchen Fall unvermeidlich.

Um dies zu verhindern kann es in einem solchen Fall sinnvoll sein dafür zu sorgen, dass das Behältergehäuse 8 sich im Ganzen von dem Bremsgerätgehäuse 2 abtrennt, bevor die darauf einwirkenden Beschleunigungskräfte Werte erreichen, bei denen die Integrität von dem Behältergehäuse 8 nicht mehr aufrechterhalten wird. Der Betrag von einem derartigen Grenzwerte Beschleunigungskräfte kann bei Auslegung des Druckmittelbehälter konstruktiv bestimmt werden und ist von der jeweiligen Gestalt Druckbehälters 5 abhängig. Zu diesem Zweck sind die beiden Befestigungslaschen 9,9' gezielt als Sollbruchstellen des Bremsgerätgehäuse-Druckmittelbehälter-Verbundes ausgebildet. Die Befestigungslasche 9,9' sind derart ausgelegt, dass sie bei einer definierten Bruchlast in einem Abschnitt reißen, welcher keine Beschädigung der Außenwandung 22 von dem Behältergehäuse 8 nach sich zieht. Dies erfolgt konstruktiv, beispielsweise durch eine gezielte Auslegung der Materialstärke oder der Verbindungsstelle zum Behältergehäuse 8 oder wenigstens eine gesonderte Kerbe 23.

Zugleich dürfen die Befestigungslaschen 9, 9' nicht zu schwach ausgelegt werden, damit die Betriebsbelastungen nicht zu deren Beschädigungen führen. Die höchsten Betriebsbelastungen erfährt der Druckmittelbehälter 5 während der Erstbefüllung beim Fahrzeughersteller. Die Erstbefüllung wird meistens als eine Druck- beziehungsweise Unterdruckbefüllung durchgeführt. Hierbei wird in dem Bremssystem ein Unterdruck erzeugt und das Druckmittel über den Behälter in das Bremssystem eingesaugt. An den vergleichsweise engen Verbindungskanälen innerhalb der Anschlussstutzen 6, 6' entsteht dabei ein vergleichsweise hoher Staudruck, welcher mit einer Zugkraft Fz auf jede Befestigungslasche 9,9' einwirkt. Diese Zugkraft Fz kann sowohl rechnerisch als auch im Versuch für jede Druckmittelbehälter Gestalt rechnet bzw. bestimmt werden.

Die Bruchlast, welche zum Reißen der Befestigungslaschen 9, 9' führt muss daher auf jeden Fall größer sein, als die größte klärende Druckbefüllung wirkende Kraft Fz, multipliziert mit deinem definierten Sicherheitsfaktor. Es empfiehlt sich einen Sicherheitsfaktor von mindestens 50% vorzusehen.

### Fig.3

Fig. 2 zeigt eine Detailansicht einer anderen Ausführungsform des Bremsgeräts 1 dient zur Verdeutlichung des bereits vorstehend beschrieben Einrastvorganges des Querbolzens 11. Der Abbildung entnimmt man vier über den Umfang regelmäßig verteilte Federlaschen 14 und eine halbkugelig ausgebildete Aufdickung 15 an einem Ende des Querbolzen 11. Beim Einführen des Querbolzens in die vorgesehene Öffnung werden die Federlaschen 14 zunächst durch die Aufdickung 15 elastisch nach radial außen aufgeweitet, schnappen dann hinterher zu und halten so die Aufdickung in axiale Richtung kraftformschlüssig fest.

### Fig.4

Fig.4 zeigt eine räumliche Ansicht eine Ausführungsform des Bremsgerät gemäß Fig.3 mit einem als ein Hydraulikblock ausgebildeten Bremsgerätgehäuse 2. Man erkennt deutlich einen frontal, dem Betätigungsglied 19 gegenüberliegend an dem Bremsgerätgehäuse 2 angebrachten Druckmittelbehälter 5, sowie jeweils seitlich gegenüberliegend an dem gleichen Bremsgerätgehäuse 2 angeordneten Antriebseinheit 18 und elektronische Steuereinheit 16.

### Fig.5

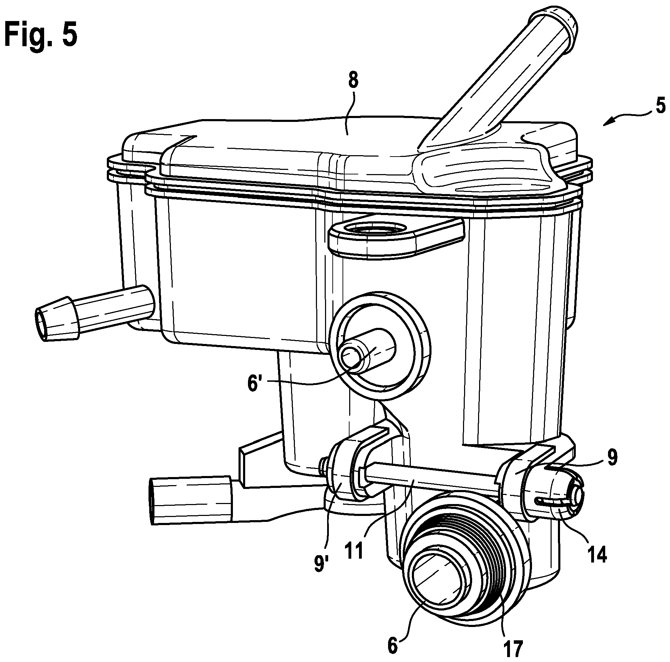

in der Fig. 5 ist der Druckmittelbehälter 5 gemäß Fig. 4 separat, in einer anderen räumlichen Ansicht dargestellt. Man erkennt die beiden Anschlussstutzen 6 und 6', welche sowohl in vertikaler als auch in horizontaler Richtung zueinander beabstandet ausgebildet sind und jeweils unterschiedliche Durchmesser aufweisen. An dem 1. Anschlussstutzen 6 ist das Dichtelement 17 angeordnet. Dieser ist an dem Anschlussstutzen 6'nicht dargestellt. Zwischen den beiden Befestigungslaschen 9, 9' weist das Behältergehäuse 8 einen planen Oberflächenabschnitt, welcher planparallel zu der ebenfalls weitestgehend eben ausgebildeten Frontseite des quaderförmigen Bremsgerätgehäuses 2 ausgebildet ist.

### Bezugszeichen:

- 1: Bremsgerät
- 2: Bremsgerätgehäuse
- 3: Frontseite
- 4: Rückseite
- 5: Druckmittelbehälter
- 6: Anschlussstutzen
- 7: Aufnahmesitz
- 8: Behältergehäuse
- 9: Befestigungslasche
- 10: Befestigungsauge
- 11: Querbolzen
- 12: Durchbruch
- 13: Rastverbindung
- 14: Federlasche
- 15: Aufdickung
- 16: Steuereinheit
- 17: Dichtelement
- 18: Antriebseinheit
- 19: Betätigungsglied
- 20: Pedal
- 21: Membrane
- 22: Außenwandung
- 23: Kerbe
- 24: Kammer
- 25: Motorraum
- 26: Fahrgastraum
- 27: Spritzwand
- 28: Frontscheibe
- 29: Überhang
- A: Antriebsachse
- M: Massenschwerpunkt
- Ff: Beschleunigungskraft in Fahrtrichtung
- Fq: Beschleunigungskraft in Querrichtung
- Fz: Zugkraft
- Rb: Betätigungsrichtung
- Rf: Fahrtrichtung
- W: Winkel

## Patentansprüche

1. Bremsgerät (1) für eine hydraulische Kraftfahrzeugbremsanlage umfassend wenigstens ein Bremsgerätgehäuse (2), welches nach Montage im Fahrzeug eine im Wesentlichen in Fahrtrichtung (Rf) ausgerichtete Frontseite (3) und eine entgegen der Fahrtrichtung ausgerichtete Rückseite (4) aufweist und ferner umfassend wenigstens einen an dem Bremsgerätgehäuse (2) angeordneten Druckmittelbehälter (5) mit einem Behältergehäuse (8), **dadurch gekennzeichnet, dass** der Druckmittelbehälter (5) wenigstens einen ersten Anschlussstutzen (6) zur Versorgung des Bremsgeräts (1) mit einem hydraulischen Druckmittel aufweist, welcher im Wesentlichen parallel oder in einem spitzen Winkel (W) zur Fahrtrichtung (Rf) ausgerichtet in einem in dem Bremsgerätgehäuse (2) ausgebildeten Aufnahmesitz (7) gesteckt angeordnet ist.

2. Bremsgerät (1) nach Anspruch 1 **dadurch gekennzeichnet, dass** der Druckmittelbehälter (5) im Wesentlichen an der Frontseite (3) des Bremsgerätgehäuses (2) angeordnet und befestigt ist.

3. Bremsgerät (1) nach Anspruch 2 **dadurch gekennzeichnet, dass** der Druckmittelbehälter (2) wenigstens zwei Befestigungslaschen (9, 9') zum Befestigen an Bremsgerätgehäuse (2) aufweist, wobei die Befestigungslaschen (9, 9') im Wesentlichen entlang der Fahrtrichtung (Rf) gestreckt sowie quer zur Fahrtrichtung (Rf) zueinander beanstandet ausgebildet sind, wobei jede Befestigungslasche (9, 9') mit einem ersten Ende mit dem Behältergehäuse (8) verbunden oder an dem Behältergehäuse (8) angeformt ist und an einem anderen Ende ein Befestigungsauge (10, 10') aufweist.

4. Bremsgerät (1) nach Anspruch 3 **dadurch gekennzeichnet, dass** die Befestigungslaschen (9, 9') entlang der Fahrtrichtung (Rf) in Bezug zu einem Massenschwerpunkt (M) des Druckmittelbehälters (5) versetzt angeordnet sind.

5. Bremsgerät (1) nach Anspruch 3 oder 4 **dadurch gekennzeichnet, dass** der Druckmittelbehälter (5) durch einen Querbolzen (11) an dem Bremsgerätgehäuse (2) gesichert ist, welcher durch einen Durchbruch (12) im Bremsgerätgehäuse (2) sowie durch die Befestigungsaugen (10, 10') in beiden Befestigungslaschen (9, 9') durchgesteckt und am wenigstens einem Befestigungsauge (10) über eine Rastverbindung (13) zumindest in axiale Richtung fixiert ist.

6. Bremsgerät (1) nach Anspruch 5 **dadurch gekennzeichnet, dass** die Rastverbindung (13) durch eine Mehrzahl von Federlaschen (14) realisiert ist, welche auf wenigstens einer Befestigungslasche (9, 9') um das Befestigungsauge (10, 10') herum angeordnet sind und eine endseitige Aufdickung (15) des Querbolzens (11) radial umgreifen.

7. Bremsgerät (1) nach wenigstens einem der Ansprüche 3 bis 6 **dadurch gekennzeichnet, dass** die Befestigungslasche (9, 9') derart als eine Sollbruchstelle ausgebildet ist, dass sie bei einer definierten Bruchlast an wenigstens einer Stelle durchbricht, wobei die für eine konstruktive Auslegung der Befestigungslasche (9, 9') herangezogene Bruchlast höher gewählt ist, als eine bei einer Druckbefüllung des Druckmittelbehälters (5) auf die Befestigungslasche (9, 9') wirkende Zugkraft (Fz) und zugleich geringer, als eine kleinstmögliche Kraft, welche einen Integritätsverlust des Behältergehäuses (8) aufgrund von auf das Behältergehäuse (8) von innen und/oder außen wirkenden Beschleunigungskräften (Ff, Fq) erforderlich ist.

8. Bremsgerät (1) nach wenigstens einem der Ansprüche 3 bis 7 **dadurch gekennzeichnet, dass** der Druckmittelbehälter (5) wenigstens einen zweiten Anschlussstutzen (6') aufweist, welcher zu dem ersten Anschlussstutzen (6) parallel ausgerichtet sowie in eine vertikale Richtung beabstanded ausgebildet ist und die Befestigungslaschen (9, 9') in vertikale Richtung in einem Bereich zwischen dem ersten (6) und dem zweiten (6') Anschlussstutzen angeordnet sind.

9. Bremsgerät (1) nach wenigstens einem der vorherigen Ansprüche **dadurch gekennzeichnet, dass** das in dem Behältergehäuse (8) eine hydraulisch dichte Membrane (21) angeordnet ist, welche zumindest abschnittsweise an eine Außenwandung (22) von dem Behältergehäuse (8) anliegt, insbesondere diese im Wesentlichen vollständig ausgekleidet.

10. Bremsgerät (1) nach wenigstens einem der vorherigen Ansprüche **dadurch gekennzeichnet, dass** das Bremsgerät (1) durch einen Fahrer über ein Betätigungsglied (19) mechanisch betätigbar ist, welcher an der Rückseite (4) von dem Bremsgerätgehäuse (2) angeordnet ist.

11. Bremsgerät (1) nach wenigstens einem der vorherigen Ansprüche **dadurch gekennzeichnet, dass** das Bremsgerät (1) über eine elektromotorische Antriebseinheit (18) betätigbar ist und eine elektronische Steuereinheit (16) umfasst, wobei die Antriebseinheit (18) und die Steuereinheit (16) gegenüberliegend an dem Bremsgerätgehäuse (2) befestigt angeordnet sind.

## Claims

1. Brake device (1) for a hydraulic motor vehicle brake system, comprising at least one brake device housing (2) which, after being mounted in the vehicle, has a front side (3) oriented substantially in the direction of travel (Rf) and a rear side (4) oriented counter to the direction of travel, and also comprising at least one pressure medium container (5) which is arranged on the brake device housing (2) and has a container housing (8), **characterized in that** the pressure medium container (5) has at least one first connection piece (6) for supplying the brake device (1) with a hydraulic pressure medium, which is oriented substantially parallel or at an acute angle (W) to the direction of travel (Rf) and plugged in a receiving seat (7) formed in the brake device housing (2).

2. Brake device (1) according to Claim 1, **characterized in that** the pressure medium container (5) is arranged substantially on the front side (3) of the brake device housing (2) and fastened thereto.

3. Brake device (1) according to Claim 2, **characterized in that** the pressure medium container (2) has at least two fastening tabs (9, 9') for fastening to the brake device housing (2), wherein the fastening tabs (9, 9') extend substantially in the direction of travel (Rf) and are spaced apart from one another transversely to the direction of travel (Rf), wherein each fastening tab (9, 9') is connected to the container housing (8) or is integrally formed on the container housing (8) by a first end and has a fastening eye (10, 10') at another end.

4. Brake device (1) according to Claim 3, **characterized in that** the fastening tabs (9, 9') are offset in the direction of travel (Rf) with respect to a center of gravity (M) of the pressure medium container (5).

5. Brake device (1) according to Claim 3 or 4, **characterized in that** the pressure medium container (5) is secured to the brake device housing (2) by a transverse bolt (11) which is plugged through an aperture (12) in the brake device housing (2) and through the fastening eyes (10, 10') in the two fastening tabs (9, 9') and is fixed at least in an axial direction via a latching connection (13) at the at least one fastening eye (10).

6. Brake device (1) according to Claim 5, **characterized in that** the latching connection (13) is realized by a plurality of spring clips (14) which are arranged around the fastening eye (10, 10') on at least one fastening tab (9, 9') and engage radially around a terminal thickening (15) of the transverse bolt (11).

7. Brake device (1) according to at least one of Claims 3 to 6, **characterized in that** the fastening tab (9, 9') is in the form of a predetermined breaking point such that it breaks in two at at least one point under a defined breaking load, wherein the breaking load used for a structural design of the fastening tab (9, 9') is chosen to be higher than a tensile force (Fz) acting on the fastening tab (9, 9') when the pressure medium container (5) is filled under pressure and at the same time lower than a smallest possible force that is necessary for a loss of integrity of the container housing (8) on account of acceleration forces (Ff, Fq) acting on the container housing (8) from the inside and/or outside.

8. Brake device (1) according to at least one of Claims 3 to 7, **characterized in that** the pressure medium container (5) has at least one second connection piece (6'), which is oriented parallel to the first connection piece (6) and is spaced apart therefrom in a vertical direction, and the fastening tabs (9, 9') are arranged in the vertical direction in a region between the first (6) and the second (6') connection piece.

9. Brake device (1) according to at least one of the preceding claims,
**characterized in that** a hydraulically tight membrane (21) is arranged in the container housing (8), said membrane (21) bearing at least partially on an outer wall (22) of the container housing (8), in particular lining the latter more or less entirely.

10. Brake device (1) according to at least one of the preceding claims,
**characterized in that** the brake device (1) is mechanically actuable by a driver via an actuating member (19) which is arranged on the rear side (4) of the brake device housing (2).

11. Brake device (1) according to at least one of the preceding claims,
**characterized in that** the brake device (1) is actuable via an electromotive drive unit (18) and comprises an electronic control unit (16), wherein the drive unit (18) and the control unit (16) are fastened to the brake device housing (2) on opposite sides.

## Revendications

1. Appareil de freinage (1) pour un système de freinage hydraulique de véhicule à moteur, comprenant au moins un boîtier (2) d'appareil de freinage, qui, après montage dans le véhicule, présente un côté avant (3) orienté essentiellement dans le sens du déplacement (Rf) et un côté arrière (4) orienté à l'opposé de la direction de déplacement, et comprenant en outre au moins un récipient (5) de fluide sous pression agencé sur le boîtier (2) d'appareil de freinage, qui comprend un boîtier (8) de récipient, **caractérisé en ce que** le récipient (5) de fluide sous pression comporte au moins un premier raccord (6) pour alimenter l'appareil de freinage (1) en fluide hydraulique sous pression, lequel est inséré dans un siège de réception (7) formé dans le boîtier (2) d'appareil de freinage et est orienté sensiblement parallèlement ou selon un angle aigu (W) par rapport à la direction de déplacement (Rf).

2. Appareil de freinage (1) selon la revendication 1, **caractérisé en ce que** le récipient (5) de fluide sous pression est agencé et fixé essentiellement sur le côté avant (3) du boîtier (2) d'appareil de freinage.

3. Appareil de freinage (1) selon la revendication 2, **caractérisé en ce que** le récipient (2) de fluide sous pression présente au moins deux pattes de fixation (9, 9') pour la fixation au boîtier (2) d'appareil de freinage, les pattes de fixation (9, 9') étant essentiellement allongées dans la direction de déplacement (Rf) et espacées l'une de l'autre transversalement à la direction de déplacement (Rf), chaque patte de fixation (9, 9') étant reliée par une première extrémité au boîtier (8) de récipient ou formée sur le boîtier (8) de récipient et présentant un œillet de fixation (10, 10') à une autre extrémité.

4. Appareil de freinage (1) selon la revendication 3, **caractérisé en ce que** les pattes de fixation (9, 9') sont agencées de façon décalée le long de la direction de déplacement (Rf) par rapport à un centre de gravité (M) du récipient (5) de fluide sous pression.

5. Appareil de freinage (1) selon la revendication 3 ou la revendication 4,
**caractérisé en ce que** le récipient (5) de fluide sous pression est fixé au boîtier (2) d'appareil de freinage par un boulon transversal (11), qui est inséré à travers une ouverture (12) dans le boîtier (2) d'appareil de freinage ainsi qu'à travers les œillets de fixation (10, 10') dans les deux pattes de fixation (9, 9') et est fixé au moins dans la direction axiale sur au moins un œillet de fixation (10) par l'intermédiaire d'une liaison par encliquetage (13).

6. Appareil de freinage (1) selon la revendication 5, **caractérisé en ce que** la liaison par encliquetage (13) est réalisée par une pluralité de languettes élastiques (14) qui sont agencées sur au moins une patte de fixation (9, 9') autour de l'œillet de fixation (10, 10') et qui viennent en engagement radialement autour d'un épaississement (15) côté extrémité de l'axe transversal (11).

7. Appareil de freinage (1) selon au moins l'une des revendications 3 à 6,
**caractérisé en ce que** la patte de fixation (9, 9') est conçue comme un point de rupture de telle sorte qu'elle se rompt en au moins un point à une charge de rupture définie, la charge de rupture utilisée pour la conception de la patte de fixation (9, 9') étant choisie plus élevée qu'une force de traction (Fz) agissant sur la patte de fixation (9, 9') lors d'un remplissage sous pression du récipient (5) de fluide sous pression et en même temps inférieure à la force la plus faible possible qui est nécessaire pour éviter une perte d'intégrité du boîtier (8) de récipient en raison de forces d'accélération (Ff, Fq) agissant sur le boîtier (8) de récipient de l'intérieur et/ou de l'extérieur.

8. Appareil de freinage (1) selon au moins l'une des revendications 3 à 7,
**caractérisé en ce que** le récipient (5) de fluide sous pression présente au moins un deuxième raccord (6') qui est orienté parallèlement au premier raccord (6) et est espacé dans la direction verticale, et les pattes de fixation (9, 9') sont agencées dans la direction verticale, dans une zone située entre le premier raccord (6) et le deuxième raccord (6').

9. Appareil de freinage (1) selon au moins l'une des revendications précédentes, **caractérisé en ce qu'**une membrane (21) étanche hydrauliquement est agencée dans le boîtier (8) de récipient, laquelle repose au moins partiellement contre une paroi extérieure (22) du boîtier (8) de récipient, en particulier en recouvrant celle-ci essentiellement complètement.

10. Appareil de freinage (1) selon au moins l'une des revendications précédentes, **caractérisé en ce que** l'appareil de freinage (1) est apte à être actionné mécaniquement par un conducteur par l'intermédiaire d'un organe d'actionnement (19) qui est agencé sur le côté arrière (4) du boîtier (2) d'appareil de freinage.

11. Appareil de freinage (1) selon au moins l'une des revendications précédentes, **caractérisé en ce que** l'appareil de freinage (1) est apte à être actionné par une unité d'entraînement (18) à moteur électrique et comprend une unité (16) de commande électronique, l'unité d'entraînement (18) et l'unité de commande (16) étant fixées en face l'une de l'autre sur le boîtier (2) de l'appareil de freinage.
